Europäisches Patentamt

European Patent Office

Office européen des brevets

(19)

(11) **EP 0 703 190 B1**

(12) **FASCICULE DE BREVET EUROPEEN**

(45) Date de publication et mention
de la délivrance du brevet:
**19.01.2000 Bulletin 2000/03**

(51) Int Cl.[7]: **C01B 15/10**, B01D 9/00

(21) Numéro de dépôt: **95202480.0**

(22) Date de dépôt: **13.09.1995**

(54) **Procédé pour la fabrication de particules de persels**

Verfahren zur Herstellung von Persalzteilchen

Process for the production of persalt particles

(84) Etats contractants désignés:
**AT BE CH DE DK ES FR GB IT LI NL SE**

(30) Priorité: **22.09.1994 IT MI941928**

(43) Date de publication de la demande:
**27.03.1996 Bulletin 1996/13**

(73) Titulaire: **SOLVAY INTEROX (Société Anonyme)**
**B-1050 Bruxelles (BE)**

(72) Inventeurs:
• **Pardini, Romano**
**I-Rosignano-Solvay (IT)**
• **Parvaneh, Soraya**
**I-Livorno (IT)**
• **Baccani, Corrado**
**I-20122 Milano (IT)**

(74) Mandataire: **Decamps, Alain René François**
**SOLVAY & Cie S.A.**
**Département de la Propriété Industrielle**
**Rue de Ransbeek, 310**
**1120 Bruxelles (BE)**

(56) Documents cités:
**FR-A- 2 318 112          US-A- 2 986 448**
**US-A- 4 830 836**

• **D. W. GREEN (ED.) 'Perry's Chemical Engineers'**
**Handbook, 6th Edition' 1985 , MCGRAW-HILL ,**
**NEW YORK * page 19-35 - page 19-39 * ***
**spécialement page 19-37, colonne 2, paragraphe**
**3 ***

EP 0 703 190 B1

**Description**

L'invention concerne un procédé et une installation pour la fabrication de particules solides de persels selon les revendications 1 et 10 de la présente demande.

Les particules solides de persels obtenus par le procédé sont utilisés dans divers types d'industrie comme support d'oxygène actif à l'état solide et, en particulier, dans l'industrie de la détergence.

On connaît depuis longtemps des procédés de fabrication de persels par cristallisation à partir d'une solution aqueuse sursaturée obtenue par mélange dans un cristalliseur de solutions concentrées de peroxyde d'hydrogène et d'un sel hydrosoluble (brevet US-2,986,448). Dans ce brevet, on enseigne aussi, qu'en variante, il est possible d'utiliser un autre type de cristalliseur, dans lequel une solution sursaturée s'écoule dans un mouvement ascendant à travers un lit de cristaux en formation et en croissance, ce qui permet de réaliser une certaine classification des particules (cristalliseur de type Oslo, colonne 3, lignes 9 à 12).

Ces procédés connus présentent cependant le désavantage de fournir des persels dont la distribution granulométrique est toujours relativement étalée et dont la stabilité n'est pas très élevée. Leur exploitation en régime continu est par ailleurs souvent rendue difficile par le dépôt de cristaux qui se fixent solidement aux parois des appareillages et viennent former des croûtes qu'il est nécessaire d'éliminer périodiquement.

L'invention remédie aux inconvénients des procédés connus en fournissant un procédé qui permet d'obtenir, dans des conditions économiques, du PCS stable et de distribution granulométrique serrée au moyen d'un procédé continu.

A cet effet, l'invention concerne un procédé continu pour la fabrication de particules solides d'au moins un persel d'au moins un métal alcalin par réaction d'une solution aqueuse concentrée de peroxyde d'hydrogène avec une solution aqueuse concentrée d'au moins un sel d'au moins un métal alcalin et cristallisation du persel formé dans un cristalliseur-classificateur selon lequel le cristalliseur comporte une zone de clarification surmontant une zone agitée parcourue par un courant ascendant d'une solution sursaturée du persel dans laquelle des particules de persel se déplacent en sens contraire à celui de la solution, le cristalliseur étant disposé au-dessus d'un classificateur dans lequel les particules solides de persel sont soumises à élutriation et se rassemblent à la partie inférieure du classificateur où elles sont soutirées.

Par persel on entend désigner tout composé inorganique solide dans les conditions normales de température et de pression qui libère, lorsqu'on le met en solution dans l'eau, du peroxyde d'hydrogène et un sel d'un acide inorganique. Des exemples de persels conformes au procédé selon l'invention sont les perborates, les phosphates peroxyhydratés et les carbonates peroxyhydratés.

Le procédé conforme à l'invention s'adresse en particulier à la fabrication de particules solides de perborates ou de carbonates peroxyhydratés de métaux alcalins. Il a donné d'excellents résultats pour la fabrication de carbonates peroxyhydratés de métaux alcalins.

Le procédé est applicable pour la fabrication de persels de tout métal alcalin. Il convient bien pour la fabrication de persels de sodium ou de potassium. Il a donné d'excellents résultats pour la fabrication de persels de sodium.

Le procédé selon l'invention convient tout spécialement pour la fabrication du carbonate peroxyhydraté de sodium, de formule $2Na_2CO_3.3H_2O_2$, communément appelé percarbonate de sodium.

Le procédé est aussi utilisable pour la fabrication d'un mélange de plusieurs persels, par exemple d'un mélange de perborate et de carbonate peroxyhydraté de métaux alcalins. Il peut aussi être utilisé pour la fabrication d'un mélange de persels de différents métaux alcalins, tels que, par exemple, de persels de sodium et de potassium.

Par sel de métal alcalin, on entend désigner un sel hydrosoluble de métal alcalin d'un acide inorganique capable de fixer du peroxyde d'hydrogène par formation d'un composé solide dans les conditions normales de température et de pression, encore appelé persel tel que défini plus haut. Des exemples de tels sels sont les borates de métaux alcalins, les phosphates de métaux alcalins et les carbonates de métaux alcalins. Le métaborate de sodium ou de potassium et le carbonate de sodium ou de potassium sont préférés. Le carbonate de sodium a donné d'excellents résultats.

Selon l'invention, on opère dans un cristalliseur-classificateur, c'est-à-dire dans un appareil permettant de réaliser la génération de cristaux solides et leur croissance contrôlée en vue d'obtenir des particules de distribution granulométrique peu étalée.

Dans le procédé conforme à l'invention, la solution de persel obtenue par réaction du peroxyde d'hydrogène avec le sel de métal alcalin circule dans le cristalliseur-classificateur en un courant qui traverse du bas vers le haut un lit de cristaux de persels en formation et croissance. Cette solution de persel est maintenue dans le cristalliseur-classificateur dans des conditions de concentration et de température réglées pour créer un état de légère sursaturation.

La solution aqueuse concentrée de peroxyde d'hydrogène mise en oeuvre peut contenir des quantités variables de $H_2O_2$ en fonction du type de persel fabriqué et des autres conditions de travail. On utilise avantageusement des solutions aqueuses contenant au moins 15 % en poids et, de préférence, au moins 20 % en poids de peroxyde d'hydrogène. Il est intéressant, afin de préserver la sécurité du procédé, de mettre en oeuvre des solutions aqueuses de peroxyde d'hydrogène ne contenant pas plus de 80 % en poids et, de préférence, pas plus de 70 % en poids de peroxyde d'hydrogène. Des solutions de peroxyde d'hydrogène de 35 à 45 % en poids ont donné d'excellents résultats.

La concentration de la solution aqueuse de sel de métal alcalin à utiliser dépend de la solubilité dans l'eau et, partant, de la nature du sel employé, de la nature et de la quantité de l'agent de relargage mis en oeuvre ainsi que des conditions de température et de pression régnant dans le cristalliseur. Cette concentration est habituellement réglée pour obtenir, après réaction avec la solution concentrée de peroxyde d'hydrogène, une solution aqueuse sursaturée en persel à cristalliser.

Selon l'invention, la solution de persel peut contenir au moins un agent de relargage et au moins un stabilisant. Par agent de relargage, on entend désigner un agent qui diminue la solubilité du persel en solution aqueuse et dont la présence facilite la cristallisation de ce persel. Parmi les divers agents de relargage possibles, on préfère utiliser un sel inorganique d'acide fort d'un métal alcalin identique au métal alcalin du persel. Dans le cas de la fabrication de percarbonate de sodium, les sels NaCl et $Na_2SO_4$ qui présentent, en solution aqueuse, le cation commun $Na^+$ avec le percarbonate de sodium conviennent bien. La concentration de l'agent de relargage dans la solution de peroxyde d'hydrogène est habituellement choisie d'au moins 4 g/100g de solution et, de préférence d'au moins 9 g/100g de solution. Elle ne dépasse généralement pas 25 g/100g de solution et, de préférence, ne dépasse pas 19 g/100g de solution. Des concentrations en agent de relargage de 16,5 g/100g de solution dans le cas de l'emploi de NaCl et de 9 g/100g de solution dans le cas de l'emploi de $Na_2SO_4$ ont donné d'excellents résultats.

Par stabilisant, on entend aussi désigner tout composé susceptible de préserver le peroxyde d'hydrogène contre la décomposition et par voie de conséquence, la perte de son oxygène actif. Les stabilisants habituels des solutions aqueuses alcalines de peroxyde d'hydrogène conviennent généralement bien, en particulier les silicates de sodium et de potassium, les sels solubles de magnésium, les agents séquestrants inorganiques ou organiques. Parmi ces derniers, les phosphonates organiques ont donné de bons résultats, en particulier le sel de sodium de l'acide 1-hydroxyéthane-1,1-diphosphonique.

Les concentrations de stabilisants mises en oeuvre varient suivant l'efficacité de ces composés à stabiliser le peroxyde d'hydrogène. Dans le cas de silicates de sodium ou de potassium, on ne descendra généralement pas endessous de 10 g de silicate/kg de $Na_2CO_3$ mis en oeuvre. On ne dépassera cependant pas, le plus souvent, 80 g de silicate/kg de $Na_2CO_3$. Dans le cas des séquestrants, produits plus efficaces, on ne descendra pas en-dessous de 1 g de séquestrant/kg de $Na_2CO_3$. Pour les séquestrants, des quantités de 20 g/kg de $Na_2CO_3$ constituent une limite supérieure qui n'est généralement pas dépassée. Il est aussi avantageux de mettre en oeuvre plusieurs stabilisants en combinaison. Une combinaison de 40 g/kg de $Na_2CO_3$ en silicate de sodium et de 2.4 g/kg de $Na_2CO_3$ en sel de sodium de l'acide 1-hydroxyéthane-1,1-diphosphonique a donné d'excellents résultats.

On peut incorporer l'agent de relargage et le stabilisant en divers points du procédé. Ces produits peuvent être incorporés indifféremment sous forme solide ou sous forme de solution aqueuse, séparément ou en mélange. L'injection de l'agent de relargage dans la solution de sel de métal alcalin et du stabilisant dans la solution de peroxyde d'hydrogène a donné d'excellents résultats.

Selon une variante avantageuse du procédé conforme à l'invention, on incorpore à la solution de sel de métal alcalin un adjuvant de cristallisation. Par ce vocable, on entend désigner un composé ou une composition qui modifie la forme des cristaux obtenus en transformant les cristaux aciculaires en formes moins anguleuses et moins fragiles. Des exemples de tels adjuvants sont les phosphates condensés tels que l'hexamétaphosphate et le pyrophosphate d'ammonium ou de sodium, et les homo ou copolymères de l'acide acrylique hydrosolubles.

La quantité d'adjuvants de cristallisation que l'on met en oeuvre dans le procédé selon l'invention dépend, dans une large mesure, de paramètres divers tels que, par exemple, la nature de l'adjuvant, les conditions de température et d'agitation qui règnent dans le cristalliseur et le temps de séjour des solutions dans le cristalliseur. D'une manière générale, cette quantité ne sera pas inférieure à 2 g/kg de $Na_2CO_3$ mis en oeuvre et, de préférence, pas inférieure à 5 g/kg de $Na_2CO_3$. Le plus souvent, la quantité d'adjuvant ne dépassera pas 50 g/kg de $Na_2CO_3$ et, de préférence, ne dépassera pas 30 g/kg de $Na_2CO_3$. Il est parfois avantageux de combiner l'effet de plusieurs adjuvants différents.

Selon l'invention, on injecte les solutions de peroxyde d'hydrogène et de sel de métal alcalin dans une zone de formation et de croissance située à la partie inférieure d'un cristalliseur continu qui fonctionne à la fois comme réacteur pour générer la solution sursaturée de persel et comme cristalliseur pour séparer les particules de ce même persel du reste de la solution. La zone de formation et de croissance du cristalliseur est agitée en permanence et traversée par un courant ascensionnel de liquide dans lequel naissent et croissent les cristaux formant les particules de persel.

Une variante avantageuse du procédé selon l'invention consiste à régler la densité de la suspension des particules en croissance dans la zone de formation et de croissance de manière telle qu'elle ne soit jamais inférieure à 25 % en poids de matières solides et, de préférence, pas inférieure à 30 % en poids de matières solides.

Par ailleurs, il n'est généralement pas intéressant de dépasser une densité de suspension de 60 % en poids de matières solides dans la zone de formation et de croissance et, de préférence, pas intéressant de dépasser une densité de 50 % en poids de matières solides.

La température régnant dans le cristalliseur est réglée de manière telle que l'on y maintient des conditions de légère sursaturation de la solution de persel, compte tenu de la nature et de la quantité des divers additifs et, en particulier, de l'agent de relargage. D'une manière générale, elle sera au moins égale à 5 °C et, de préférence, au moins égale à 8 °C. Le plus souvent, cette température n'excédera pas 40 °C et, de préférence, n'excédera pas 35 °C. Des températures de 10 à 30 °C ont donné d'excellents résultats.

Selon l'invention, la zone de formation et de croissance est une zone agitée. Cette agitation peut s'effectuer par tout dispositif connu, pourvu que l'agitation soit vigoureuse et limitée à la zone de formation et de croissance. Parmi les différents agitateurs industriels possibles, les agitateurs rotatifs conviennent bien. Il a été observé que pour une installation pilote d'échelle réduite (cristalliseur de 50 l), des vitesses de rotation d'au moins 40 tours/min et, de préférence, d'au moins 50 tours/min sont généralement appropriées. Le plus souvent, on ne dépassera pas, dans une telle installation pilote, une vitesse de rotation de l'agitateur de 120 tours/min et, de préférence, de 100 tours/min. Des vitesses de rotation de 60 à 90 tours/min ont donné de bons résultats en installation pilote.

Selon le procédé conforme à l'invention, le courant ascendant de liquide pénètre ensuite dans une zone non agitée à la partie supérieure du cristalliseur, où il se clarifie dans une zone calme appelée zone de clarification.

Lorsque les cristaux de persels croissent dans la zone de formation et de croissance, il arrive à un certain moment qu'ils forment des particules dont la taille devient suffisante pour qu'elles ne soient plus emportées par le courant ascendant ni par les mouvements de liquide causés par l'agitation. Ces particules se mettent alors à migrer en sens contraire au mouvement ascendant général du liquide traversant la zone de formation et de croissance et sédimentent vers la base du cristalliseur.

Conformément au procédé selon l'invention, ces particules quittent le cristalliseur par la base de la zone de formation et de croissance où elles sont ensuite dirigées vers un classificateur disposé en-dessous du cristalliseur (zone de classification). Les particules de persel y sont ensuite soumises à élutriation dans un courant ascendant de liquide.

Selon l'invention, le liquide d'élutriation injecté à la base de la zone de classification provient d'un prélèvement d'une partie du liquide qui s'écoule dans la partie supérieure de la zone de clarification du cristalliseur. Ce liquide est injecté sous pression à la base du classificateur.

Le débit du liquide prélevé dans la zone de clarification et réinjecté sous pression à la base du classificateur doit être réglé en fonction de la taille moyenne des particules de persel que l'on désire produire. Pour un classificateur de diamètre fixé, il est directement proportionnel à la vitesse ascensionnelle de ce liquide dans le classificateur. On s'arrange généralement pour que la vitesse ascensionnelle du liquide dans le classificateur soit d'au moins 5 m/h et, de préférence, d'au moins 10 m/h. De même, on choisira le plus souvent une vitesse ascencionnelle du liquide qui ne dépasse pas 100 m/h et, de préférence, ne dépasse pas 80 m/h. Des vitesses ascensionnelles de 20 à 50 m/h ont donné de bons résultats.

Le trop-plein de liquide débordant de la partie supérieure du classificateur est réinjecté dans le circuit de dissolution du sel de métal alcalin.

Les particules de persel qui se sont accumulées à la base du classificateur sont prélevées au moyen d'un dispositif de soutirage situé en pied de la zone de classification.

Selon une variante avantageuse du procédé conforme à l'invention, on soumet les particules qui traversent la zone de classification à une agitation pratiquée au sein du liquide ascendant du classificateur. De préférence, cette agitation met toutefois en oeuvre une énergie moindre que celle qui est déployée dans l'agitation pratiquée dans la zone de formation et de croissance du cristalliseur. Généralement, on ne dépassera pas 70 % de l'énergie d'agitation de la zone de formation et de croissance et, de préférence, 50 % de celle-ci.

L'invention concerne aussi l'utilisation du procédé pour fabriquer un carbonate peroxyhydraté de métal alcalin et, en particulier, un carbonate peroxyhydraté de sodium.

L'invention concerne encore une installation industrielle de fabrication de persel par cristallisation-classification comprenant une cuve de cristallisation de forme cylindrique munie d'un agitateur rotatif et d'un système de refroidissement, selon laquelle la cuve comporte un dispositif de séparation entre une zone inférieure agitée dans laquelle est disposée l'agitateur et une zone supérieure dépourvue d'agitateur destinée à clarifier le liquide constituant les eaux mères de cristallisation, la zone agitée est munie à sa base de systèmes d'admission des réactifs constituant les matières premières pour la fabrication du persel, un cylindre de diamètre inférieur à celui de la cuve est disposé sous celle-ci, communique avec elle et est muni à sa base d'un système d'injection de la solution provenant, via une pompe de refoulement, d'une conduite de prélèvement dont l'origine est située à la partie supérieure de la zone non agitée de la cuve, ce cylindre constituant une zone de classification par élutriation des particules en provenance de la zone agitée de la cuve et un dispositif de soutirage des particules classées est connecté à la base dudit cylindre.

De manière préférée, on dispose le cylindre de classification de manière telle que son axe soit le même que celui de la cuve de cristallisation.

Il est par ailleurs particulièrement avantageux de rendre le cylindre de classification solidaire du fond de la cuve de cristallisation.

Une variante avantageuse à l'installation industrielle selon l'invention consiste à utiliser un agitateur qui réalise, en plus de sa fonction d'homogénéisation de la zone de formation et de croissance, l'injection et la distribution d'une des deux solutions aqueuses concentrées, à savoir, la solution de peroxyde d'hydrogène ou la solution de sel de métal alcalin.

A cet effet, on utilise un agitateur à pales muni d'un axe creux qui comprend une conduite dont la partie inférieure communique avec des conduites creusées sur toute la longueur des pales inférieures de l'agitateur et qui aboutissent aux extrémités de celles-ci.

Une autre variante avantageuse à l'installation industrielle selon l'invention consiste à munir la zone de classification d'un agitateur. Divers types d'agitateurs peuvent être utilisés.

L'installation est par ailleurs explicitée avec plus de détails dans la description qui suit et qui se réfère aux figures de dessin annexées donnant une représentation schématique d'une forme de réalisation préférée de l'installation selon l'invention.

L'installation comporte essentiellement une cuve cylindrique 1 servant de cristalliseur et d'un cylindre 2 servant de classificateur, de diamètre inférieur à celui de la cuve 1 et solidaire de la paroi inférieure de cette dernière. Le cylindre 2 communique avec le fond de la cuve 1 et est disposé dans le même axe que cette dernière.

La cuve 1 est séparée en deux zones 3 et 4, respectivement zones de formation et de croissance et zone de clarification séparées par la grille 5. La zone 3 comporte un agitateur à pales 6 et un double serpentin métallique 7 dans lequel circule un fluide de refroidissement. L'axe de l'agitateur 8 est creux, de même que les pales 6 et communiquent avec le courant 9 d'arrivée de la solution aqueuse concentrée de peroxyde d'hydrogène. Une pompe 10 permet l'injection sous pression, à la base 11 de la cuve, de la solution aqueuse concentrée du sel de métal alcalin amené par la conduite 12.

Le cylindre de classification 2 est équipé d'un agitateur à pales 13 mû par un moteur 14. Une pompe de refoulement 15 permet l'injection sous pression à la base 16 d'un cône renversé situé sous le cylindre 2 d'une solution prélevée dans la partie supérieure 17 située dans la zone calme de clarification. Un dispositif de prélèvement 18 des particules classées est connecté à la base du cylindre de classification 2. Il permet le soutirage hors de l'installation des particules classées via la conduite 19.

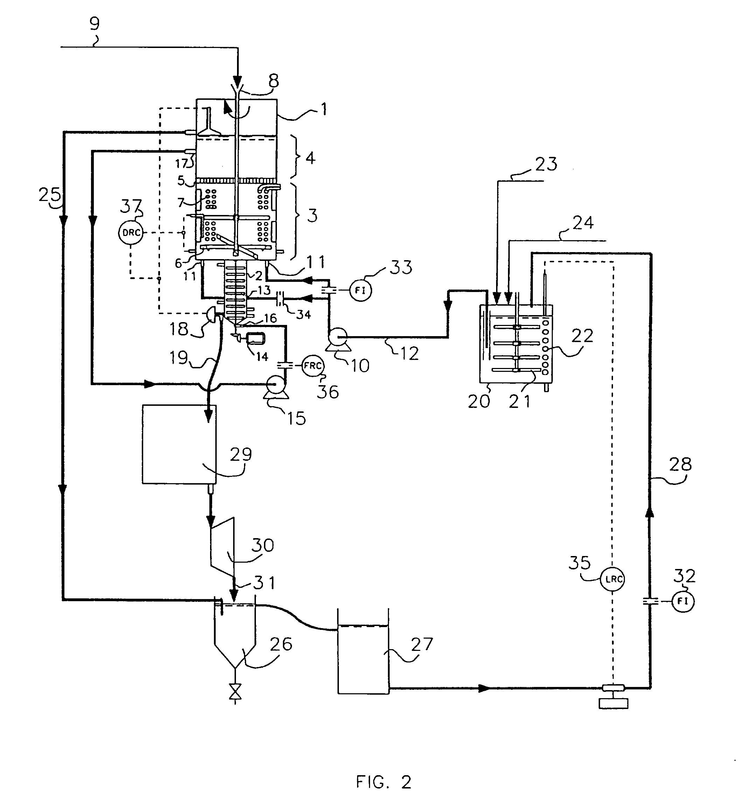

La figure 2 illustre le raccordement du cristalliseur-classificateur avec les autres dispositifs intervenant dans la production des particules de persel.

La conduite 12 d'amenée de la solution de sel de métal alcalin provient d'une cuve de dissolution des réactifs 20 munie d'un agitateur 21 et d'un serpentin de chauffage 22. Cette cuve est alimentée avec un mélange de $Na_2CO_3$ contenant le stabilisant et l'adjuvant de cristallisation éventuel via l'entrée 23. La canalisation 24 permet l'ajustement du pH de la solution au moyen d'une solution de NaOH 2N de façon à maintenir un pH d'environ 10 à 10,5 dans le cristalliseur. Le trop plein du cristalliseur 1 est recyclé via la canalisation 25, les cuves tampon 26 et 27 et la canalisation 28 dans la cuve de dissolution.

Les particules solides de persel soutirées de la zone de classification 2 via la canalisation 19 sont stockées temporairement dans la cuve tampon 29 avant d'être essorées et lavées dans la centrifugeuse 30. Les eaux-mères et les eaux de lavage provenant de la centrifugeuse 30 sont dirigées via la canalisation 31 vers la cuve tampon 26, où elles sont récupérées.

L'installation est encore munie d'afficheurs de débit 32, 33 et 34 notés FI ("Flow Indicator") ainsi que d'organes enregistreurs et de régulation de niveau 35 noté LRC ("Level Recorder Controller"), de débit 36 noté FRC ("Flow Recorder Controller") et de densité de la suspension 37 noté DRC ("Density Recorder Controller").

Les exemples qui suivent sont donnés dans le but d'illustrer l'invention, sans pour autant en limiter sa portée.

Exemple 1R (non conforme à l'invention)

Dans une cuve de dissolution de 25 l, on a dissous en continu et sous agitation à 110 tours/minute et à une température de 42 °C, une quantité de $Na_2CO_3$ réglée pour obtenir une solution contenant 120 g $Na_2CO_3$/kg de solution. On y a fait l'addition de deux stabilisants sous la forme de silicate de sodium de qualité 40 ºBé (rapport molaire $SiO_2$/$Na_2O$ = 3,4) à raison de 20 g/kg $Na_2CO_3$ présent dans la solution et d'hexamétaphosphate de sodium à raison de 6 g/kg de $Na_2CO_3$. On y a ensuite introduit du polyacrylate d'ammonium de marque PIGMENTVERTEILER® A, commercialisé par BASF, à raison de 10 g/kg de $Na_2CO_3$. Le débit de la solution de $Na_2CO_3$ contenant les stabilisants a été maintenu constant à 5 kg $Na_2CO_3$/h.

On a utilisé un cristalliseur de forme cylindrique (volume 50 l) et muni d'un agitateur. L'agitateur du cristalliseur était un agitateur à pales du type EKATO® MIG On a alimenté le cristalliseur de manière continue via l'axe de rotation de l'agitateur avec une solution de $H_2O_2$ à 40 % contenant 22 g NaCl/100 g de solution à titre d'agent de relargage et avec le débit de 5 kg $Na_2CO_3$/h de la solution de $Na_2CO_3$ contenant les stabilisants et agents de relargage en provenance de la cuve de dissolution. Le débit de la solution d'$H_2O_2$ introduite a été maintenu constant à 5 l/h.

On a maintenu durant tout l'essai une densité de 20 % de matières solides dans le cristalliseur.

La vitesse de rotation de l'agitateur du cristalliseur a été de 70 à 75 tours/min.

Dès la mise en régime de l'installation, il s'est établi dans la solution de $Na_2CO_3$ quittant la cuve de dissolution, une teneur résiduelle en $H_2O_2$ de 1,0 g $H_2O_2$/100 g de solution et une teneur en NaCl de 20 g NaCl/100 g de solution.

On a prélevé en continu à la base du cristalliseur une suspension de particules de percarbonate de sodium de densité d'environ 20 % en poids de matières solides.

Les particules de percarbonate de sodium obtenues présentaient les caractéristiques suivantes :

| Caractéristiques du percarbonate obtenu | Exemple 1R |
|---|---|
| Diamètre moyen, μm | 780 |
| Span | 1,2 |
| Masse spécifique apparente, kg/l | 0,82 |
| Teneur en oxygène actif, % | 14,1 |
| Teneur en NaCl, % | 5,5 |
| Teneur en SiO$_2$, % | 0,3 |
| Teneur en PO$_4$, % | 0,16 |

Les caractéristiques granulométriques, à savoir, le diamètre moyen et le span, ont été déterminées au moyen d'un granulomètre à laser. Le diamètre moyen est le diamètre moyen à 50 % ($D_{50}$) lu sur la courbe granulométrique cumulée qui correspond à 50 % du poids des particules. Le span est une mesure de l'étalement de la distribution granulométrique des particules. Il se calcule à partir des diamètres moyens $D_{90}$, $D_{10}$ et $D_{50}$, c'est-à-dire les diamètres moyens lus sur la courbe granulométrique cumulée tels que, respectivement, 90 %, 10 % et 50 % en poids des particules présentent un diamètre inférieur. L'expression analytique du span est la suivante :

$$span= \frac{D_{90}\text{-}D_{10}}{D_{50}}$$

Exemple 2 (conforme à l'invention)

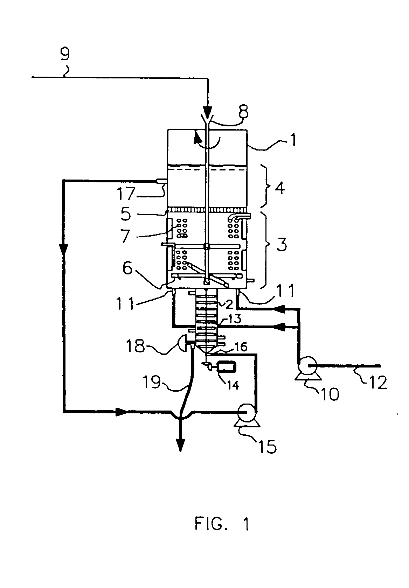

Dans la cuve de dissolution de 25 l d'une installation semblable à celle décrite aux figures 1 et 2, on a dissous en continu et sous agitation à 110 tours/minute et à une température de 42 °C, une quantité de $Na_2CO_3$ réglée pour obtenir une solution contenant 120 g $Na_2CO_3$/kg de solution. On y a fait l'addition de deux stabilisants sous la forme de silicate de sodium de qualité 40 °Bé (rapport molaire $SiO_2$/$Na_2O$ = 3,4) à raison de 20 g/kg $Na_2CO_3$ présent dans la solution et d'hexamétaphosphate de sodium à raison de 6 g/kg de $Na_2CO_3$. On y a ensuite introduit du polyacrylate d'ammonium de marque PIGMENTVERTEILER® A, commercialisé par BASF, à raison de 10 g/kg de $Na_2CO_3$. Le débit de la solution de $Na_2CO_3$ contenant les stabilisants a été maintenu constant à 4,2 kg $Na_2CO_3$/h.

On a utilisé un cristalliseur de forme cylindrique (volume 50 l), muni à sa partie inférieure d'une jambe de classification non agitée de forme cylindrique aussi (diamètre 9 cm, hauteur 46 cm). L'agitateur du cristalliseur était un agitateur à pales du type EKATO® MIG. On a alimenté le cristalliseur de manière continue via l'axe de rotation de l'agitateur avec une solution de $H_2O_2$ à 40 % contenant 16,5 g NaCl/100 g de solution à titre d'agent de relargage. Le débit de la solution d'$H_2O_2$ introduite a été maintenu constant à 5 l/h.

On a prélevé en continu un débit de 300 l/h de la zone de clarification et on l'a réinjecté sous pression à la base de la zone de classification. Le trop-plein du cristalliseur a été recyclé à la cuve de dissolution. On a maintenu durant tout l'essai une densité de 35 % de matières solides dans la zone de réaction et de croissance du cristalliseur.

La vitesse de rotation de l'agitateur du cristalliseur a été de 70 à 75 tours/min.

Dès la mise en régime de l'installation, il s'est établi dans ta solution de $Na_2CO_3$ quittant la cuve de dissolution, une teneur résiduelle en $H_2O_2$ de 0,5 g $H_2O_2$/100 g de solution et une teneur en NaCl de 15 g NaCl/100 g de solution.

On a prélevé en continu à la base de la jambe de classification une suspension de particules de percarbonate de sodium de densité d'environ 40 % en poids de matières solides.

Après 4 heures de fonctionnement, des incrustations se sont développées dans la jambe de cristallisation dans le voisinage du dispositif de prélèvement des particules. L'essai a été interrompu après 10 heures de fonctionnement suite à l'encroûtage de la jambe de classification.

Les particules de percarbonate de sodium obtenues présentaient les caractéristiques suivantes :

| Caractéristiques du percarbonate obtenu | Exemple 2 |
|---|---|
| Diamètre moyen, µm | 900 |
| Span | 1,1 |
| Masse spécifique apparente, kg/l | 0,85 |
| Teneur en oxygène actif, % | 14,3 |
| Teneur en NaCl, % | 3 |
| Teneur en $SiO_2$, % | 0,15 |
| Teneur en $PO_4$, % | 0,45 |
| Stabilité à sec, perte O actif, % | 12 |

Les caractéristiques granulométriques ont été déterminées de la même manière qu'à l'exemple 1R.

La mesure de la stabilité à sec consiste à déterminer la perte en oxygène actif du percarbonate après un stockage de 2 heures en étuve à 105 °C. Le titre en oxygène actif se fait par iodométrie traditionnelle en milieu acide.

Exemples 3 à 5 (conformes à l'invention)

On a reproduit l'exemple 2 après avoir installé dans la jambe de classification un agitateur à tiges plates perpendiculaires à l'axe de rotation que l'on a fait tourner à une vitesse de 20 tours/min. Les conditions opératoires suivantes ont été modifiées par rapport à l'exemple 2 :

| Conditions opératoires | Exemple 3 | Exemple 4 | Exemple 5 |
|---|---|---|---|
| Composition solution de $Na_2CO_3$, g/100g solution : | | | |
| $Na_2CO_3$ | 15,5 | 24,0 | 12,0 |
| $H_2O_2$ | 1,0 | 1,3 | 1,0 |
| agent relargage : | | | |
| NaCl | 16,5 | 0 | 17,0 |
| $Na_2SO_4$ | 0 | 9,0 | 0 |
| Composition solution de $Na_2CO_3$, g/kg $Na_2CO_3$ : | | | |
| stabilisants : | | | |
| silicate | 40 | 40 | 20 |
| DEQUEST® 2010 | 2,4 | 2,4 | 0 |
| adjuvants cristall. : | | | |
| $(NaPO_3)_6$ | 0 | 0 | 6 |
| $Na_4P_2O_7$ | 0 | 7,5 | 0 |
| $NH_4$ polyacrylate | 10,0 | 0 | 0 |
| Température de cristallisation, °C | 15 | 27 | 15 |
| Densité de suspension dans la zone de réaction et de croissance, % matières solides | 35 | 35 | 10 |
| Débit de la solution de $Na_2CO_3$, kg $Na_2CO_3$/h | 6,6 | 6,6 | 4,2 |
| Concentration de la solution d'$H_2O_2$, g $H_2O_2$/l | 466 | 513 | 533 |
| Débit de la solution d'$H_2O_2$, l/h | 7,5 | 10 | 4 |
| Vitesse de rotation de l'agitateur du cristalliseur, t/min | 70-75 | 70-75 | 50 |
| Débit de recyclage (trop-plein), l/h | 40-45 | 35-40 | 40 |

(suite)

| Conditions opératoires | Exemple 3 | Exemple 4 | Exemple 5 |
|---|---|---|---|
| Densité de suspension au soutirage, % matières solides | 45 | 45 | 20 |

Le stabilisant DEQUEST® 2010 a été le sel de sodium de l'acide 1-hydroxyéthane-1,1-diphosphonique.

Le polyacrylate d'ammonium employé a été le produit de marque PIGMENTVERTEILER® A commercialisé par BASF.

Les percarbonates de sodium obtenus avaient les caractéristiques suivantes :

| Caractéristiques du percarbonate obtenu | Exemple 3 | Exemple 4 | Exemple 5 |
|---|---|---|---|
| Diamètre moyen, µm | 560 | 700 | 770 |
| Span | 0,6 | 0,7 | 1,1 |
| Masse spécifique apparente, kg/l | 0,91 | 0,89 | 0,75 |
| Teneur en oxygène actif, % | 14,5 | 14,8 | 13,3 |
| Teneur en NaCl, % | 2,7 | 0 | 5 |
| Teneur en $Na_2SO_4$, % | 0 | < 0,5 | 0 |
| Teneur en $SiO_2$, % | 0,35 | 0,35 | 0,2 |
| Teneur en $PO_4$, % | 0,09 | 0,6 | 0,3 |
| Stabilité à sec, perte O actif, % | 6,1 | 2,5 | 5,1 |

Les mesures des caractéristiques granulométriques et de la stabilité à sec ont été effectuées selon les mêmes méthodes qu'aux exemples précédents.

**Revendications**

1. Procédé continu pour la fabrication de particules solides d'au moins un persel d'au moins un métal alcalin par réaction d'une solution aqueuse concentrée de peroxyde d'hydrogène avec une solution aqueuse concentrée d'au moins un sel d'au moins un métal alcalin et cristallisation du persel formé dans un cristalliseur-classificateur, caractérisé en ce que le cristalliseur comporte une zone de clarification surmontant une zone agitée parcourue par un courant ascendant d'une solution sursaturée du persel dans laquelle des particules de persel se déplacent en sens contraire à celui de la solution, que la zone de clarification supérieure et la zone inférieure sont séparées par un dispositif de séparation, le cristalliseur étant disposé au-dessus d'un classificateur dans lequel les particules solides de persel sont soumises à élutriation et se rassemblent à la partie inférieure du classificateur où elles sont soutirées.

2. Procédé selon la revendication 1, comprenant la circulation ascendante d'une solution du persel contenant au moins un agent de relargage et au moins un stabilisant, ladite solution étant maintenue dans des conditions réglées de sursaturation et la circulation se faisant à travers un lit de cristaux en formation et croissance dudit persel, caractérisé en ce que les solutions de peroxyde d'hydrogène et de sel de métal alcalin sont injectées dans une partie inférieure d'un cristalliseur, dans une zone soumise à agitation (zone de formation et de croissance), où elles réagissent pour former une solution sursaturée du persel, que le lit de cristaux occupe la zone de formation et de croissance traversée par le courant ascendant de solution, qu'à la sortie de la zone de formation et de croissance, la solution pénètre dans une zone non agitée où elle poursuit son mouvement ascendant et se clarifie (zone de clarification), que les cristaux en croissance dans la zone de formation et de croissance forment des particules qui, lorsqu'elles ont atteint une taille suffisante, commencent à se déplacer en sens opposé à celui de la solution et quittent la zone de formation et de croissance par la partie inférieure du cristalliseur pour pénétrer dans une zone de classification, située dans un classificateur extérieur au cristalliseur, sous la zone de formation et de croissance de celui-ci, dans laquelle elles sont soumises à élutriation dans un courant ascendant d'une solution provenant d'un prélèvement d'une partie du liquide de la partie supérieure de la zone de clarification du cristalliseur, ledit liquide prélevé étant réinjecté sous pression à la base de la zone de classification, que le trop-plein de liquide débordant de la partie supérieure de la zone de clarification est réinjecté dans le circuit de dissolution du sel de métal alcalin et que l'on recueille les particules produites par un soutirage pratiqué à la base de la zone de classification.

3. Procédé selon la revendication 2, caractérisé en ce que les particules qui traversent la zone de classification sont soumises à une agitation dans laquelle l'énergie déployée est plus faible que celle déployée dans l'agitation de la zone de formation et de croissance.

4. Procédé selon la revendication 2 ou 3, caractérisé en ce qu'on incorpore à la solution concentrée d'un sel de métal alcalin un adjuvant de cristallisation.

5. Procédé selon l'une quelconque des revendications 1 à 4, caractérisé en ce que l'on maintient la densité de suspension dans la zone de réaction et de croissance à une valeur d'au moins 25 % de matières solides.

6. Procédé selon l'une quelconque des revendications 1 à 5, caractérisé en ce que la température régnant dans le cristalliseur est de 8 °C à 40 °C.

7. Utilisation du procédé selon l'une quelconque des revendications 1 à 6 pour fabriquer un carbonate peroxyhydraté de métal alcalin.

8. Utilisation du procédé selon l'une quelconque des revendications 1 à 6 pour fabriquer un perborate de métal alcalin.

9. Utilisation du procédé selon la revendication 6, caractérisé en ce que le métal alcalin est le sodium.

10. Installation industrielle de fabrication de persel par cristallisation-classification selon l'une quelconque des revendications 1 à 6 comprenant une cuve de cristallisation de forme cylindrique munie d'un agitateur rotatif et d'un système de refroidissement, caractérisé en ce que la cuve comporte un dispositif de séparation entre une zone inférieure agitée dans laquelle est disposée l'agitateur et une zone supérieure dépourvue d'agitateur destinée à clarifier le liquide constituant les eaux mères de cristallisation, que la zone agitée est munie à sa base de systèmes d'admission des réactifs constituant les matières premières pour la fabrication du persel, qu'un cylindre de diamètre inférieur à celui de la cuve est disposé sous celle-ci, communique avec elle et est muni à sa base d'un système d'injection de la solution provenant, via une pompe de refoulement, d'une conduite de prélèvement dont l'origine est située à la partie supérieure de la zone non agitée de la cuve, ce cylindre constituant une zone de classification par élutriation des particules en provenance de la zone agitée de la cuve et qu'un dispositif de soutirage des particules classées est connecté à la base dudit cylindre.

11. Installation selon la revendication 10, caractérisée en ce que la zone de classification est munie d'un agitateur.

12. Installation selon l'une quelconque des revendications 10 ou 11, caractérisée en ce que l'axe de l'agitateur de la cuve de cristallisation est creux et comprend une conduite qui communique à son extrémité inférieure avec des conduites creusées dans chacune des pales inférieures de l'agitateur et qui aboutissent aux extrémités de celles-ci et permettent l'injection et la distribution de la solution de peroxyde d'hydrogène ou de la solution de sel de métal alcalin dans la zone de formation et de croissance du cristalliseur.

13. Installation selon l'une quelconque des revendications 10 à 12, caractérisée en ce que le cylindre de classification est disposé dans l'axe de la cuve de cristallisation et est solidaire de celle-ci.

**Claims**

1. Continuous process for the manufacture of solid particles of at least one persalt of at least one alkali metal by reaction of a concentrated aqueous hydrogen peroxide solution with a concentrated aqueous solution of at least one salt of at least one alkali metal and crystallization of the persalt formed in a crystallizer-classifier, characterized in that the crystallizer contains a clarifying region surmounting a stirred region through which passes a rising stream of a supersaturated solution of persalt in which persalt particles move in the contrary direction to that of the solution, the upper clarifying region and the lower region are separated by a separating device, the crystallizer being arranged above a classifier in which the solid persalt particles are subjected to elutriation and gather in the lower part of the classifier, where they are drawn off.

2. Process according to Claim 1, comprising the rising movement of a solution of the persalt containing at least one salting-out agent and at least one stabilizer, the said solution being maintained under controlled supersaturation conditions and the movement being made through a bed of crystals of the said persalt which are being formed and are growing, characterized in that the hydrogen peroxide and alkali metal salt solutions are injected into a lower part of a crystallizer, in a region subjected to stirring (formation and growth region), where they react to form a supersaturated solution of the persalt, in that the bed of crystals occupies the formation and growth region through which the rising stream of solution passes, in that, on departure from the formation and growth region, the solution enters a nonstirred region where it continues its rising movement and is clarified (clarifying region), in that the crystals growing in the formation and growth region form particles which, when they have reached a sufficient size, begin to move in the opposite direction to that of the solution and leave the formation and growth region via the lower part of the crystallizer in order to enter a classification region, situated in a classifier external to the crystallizer, under the formation and growth region of the latter, in which they are subjected to elutriation in a rising stream of a solution originating from a withdrawal of a part of the liquid from the upper part of the clarifying region of the crystallizer, the said withdrawn liquid being reinjected under pressure at the base of the classification region, in that the overflow of liquid spilling over from the upper part of the clarifying region is reinjected into the circuit for dissolution of the alkali metal salt and in that the particles produced are collected by being drawn off at the base of the classification region.

3. Process according to Claim 2, characterized in that the particles which pass through the classification region are subjected to stirring in which the energy expended is lower than that expended in the stirring of the formation and growth region.

4. Process according to Claim 2 or 3, characterized in that a crystallization adjuvant is incorporated in the concentrated solution of an alkali metal salt.

5. Process according to any one of Claims 1 to 4, characterized in that the suspension density in the reaction and growth region is maintained at a value of at least 25% of solids.

6. Process according to any one of claims 1 to 5, characterised in that the temperature in the cristalliser is from 8°C to 40°C.

7. Use of the process according to any one of Claims 1 to 6 for manufacturing an alkali metal carbonate peroxohydrate.

8. Use of the process according to any one of claims 1 to 6 for manufacturing an alkali metal perborate.

9. Use of the process according to Claim 7, characterized in that the alkali metal is sodium.

10. Industrial plant for persalt manufacture by crystallization-classification according to any one of Claims 1 to 6 comprising a crystallization vessel of cylindrical shape equipped with a rotary stirrer and with a cooling system, characterized in that the vessel contains a device for separation between a lower stirred region, in which the stirrer is arranged, and an upper region, which does not have a stirrer, intended for clarifying the liquid comprising the crystallization mother liquors, in that the stirred region is equipped at its base with systems for admission of the reactants comprising the starting materials for the manufacture of the persalt, in that a cylinder with a diameter less than that of the vessel is arranged below the latter, is in communication with it and is equipped at its base with a system for injection of the solution arising, via a recirculating pump, from a withdrawal pipe whose source is situated at the upper part of the non-stirred region of the vessel, this cylinder comprising a region for classification by elutriation of the particles originating from the stirred region of the vessel, and in that a device for drawing off the classified particles is connected to the base of the said cylinder.

11. Plant according to Claim 10, characterized in that the classification region is equipped with a stirrer.

12. Plant according to either of Claims 10 and 11, characterized in that the shaft of the stirrer of the crystallization vessel is hollow and comprises a pipe which is in communication, at its lower end, with pipes hollowed out in each of the lower paddles of the stirrer, which pipes end at the tips of the paddles and make it possible to inject and to distribute the hydrogen peroxide solution or the alkali metal salt solution into the formation and growth region of the crystallizer.

13. Plant according to any one of Claims 10 to 12, characterized in that the classification cylinder is arranged in the axis ofthe crystallization vessel and is integral with the latter.

**Patentansprüche**

1. Kontinuierliches Verfahren zur Herstellung von festen Teilchen von wenigstens einem Persalz wenigstens eines Alkalimetalls durch Reaktion einer konzentrierten wässrigen Wasserstoffperoxidlösung mit einer konzentrierten wässrigen Lösung wenigstens eines Salzes wenigstens eines Alkalimetalls und Kristallisation des gebildeten Persalzes in einem Kristallisator-Sichter, dadurch gekennzeichnet, daß der Kristallisator eine Klärungszone umfasst, die eine gerührte Zone überragt, die von einem aufsteigenden Strom einer übersättigten Lösung des Persalzes durchlaufen wird, in der sich Persalzteilchen in entgegengesetzter Richtung zu der der Lösung fortbewegen, daß die obere Klärungszone und die untere Zone durch eine Trennvorrichtung getrennt sind, wobei der Kristallisator über einem Sichter angeordnet ist, in dem die festen Persalzteilchen einem Strömungssichten unterzogen werden und sich im unteren Teil des Sichters, wo sie entnommen werden, sammeln.

2. Verfahren gemäß Anspruch 1, welches den aufsteigenden Durchfluß einer Lösung des Persalzes umfasst, die wenigstens ein Aussalzmittel und wenigstens einen Stabilisator enthält, wobei besagte Lösung unter eingestellten Übersättigungsbedingungen gehalten wird und der Durchfluß durch ein Bett aus in Bildung und Wachstum befindlichen Kristallen besagten Persalzes erfolgt, dadurch gekennzeichnet, daß die Lösungen von Wasserstoffperoxid und Alkalimetallsalz in einen unteren Teil eines Kristallisators in eine Zone, die gerührt wird (Bildungs- und Wachstumszone), eingespritzt werden, wo sie reagieren, um eine übersättigte Lösung des Persalzes zu bilden, daß das Kristallbett die Bildungs- und Wachstumszone, die von dem aufsteigenden Lösungsstrom durchströmt wird, einnimmt, daß am Ausgang der Bildungs- und Wachstumszone die Lösung in eine nicht gerührte Zone eintritt, wo sie ihre aufsteigende Bewegung fortsetzt und sich klärt (Klärungszone), daß die im Wachstum befindlichen Kristalle in der Bildungs- und Wachstumszone Teilchen bilden, die, wenn sie eine ausreichende Größe erreicht haben, anfangen, sich in entgegengesetzter Richtung zu der der Lösung zu bewegen, und die Bildungs- und Wachstumszone durch den unteren Teil des Kristallisators verlassen, um in eine Sichtungszone einzutreten, die sich in einem Sichter außerhalb des Kristallisators unter dessen Bildungs- und Wachstumszone befindet, in welcher sie in einem aufsteigenden Strom einer Lösung, die aus einer Entnahme eines Teils der Flüssigkeit aus dem oberen Teil der Klärungszone des Kristallisators entstammt, einer Strömungssichtung unterzogen werden, wobei besagte entnommene Flüssigkeit unter Druck an der Basis der Sichtungszone wieder eingespritzt wird, daß der Flüssigkeitsüberlauf, der aus dem oberen Teil der Klärungszone überläuft, in den Kreislauf der Auflösung des Alkalimetalls wieder eingespritzt wird und daß man die hergestellten Teilchen durch eine an der Basis der Sichtungszone ausgeführte Entnahme gewinnt.

3. Verfahren gemäß Anspruch 2, dadurch gekennzeichnet, daß die Teilchen, die die Sichtungszone durchströmen, einem Rühren unterzogen werden, bei dem die aufgebotene Energie geringer ist als die, die bei dem Rühren der Bildungs- und Wachstumszone aufgeboten wird.

4. Verfahren gemäß Anspruch 2 oder 3, dadurch gekennzeichnet, daß man der konzentrierten Lösung eines Alkalimetallsalzes einen Kristallisationszusatz zusetzt.

5. Verfahren gemäß einem der Ansprüche 1 bis 4, dadurch gekennzeichnet, daß man die Suspensionsdichte in der Reaktions- und Wachstumszone auf einem Wert von wenigstens 25% an Feststoffen hält.

6. Verfahren gemäß einem der Ansprüche 1 bis 5, dadurch gekennzeichnet, daß die im Kristallisator herrschende Temperatur 8 °C bis 40 °C beträgt.

7. Verwendung des Verfahrens gemäß einem der Ansprüche 1 bis 6 zur Herstellung eines Alkalimetallcarbonat-Peroxohydrats.

8. Verwendung des Verfahrens gemäß einem der Ansprüche 1 bis 6 zur Herstellung eines Alkalimetallperborats.

9. Verwendung des Verfahrens gemäß Anspruch 6, dadurch gekennzeichnet, daß das Alkalimetall Natrium ist.

10. Industrielle Vorrichtung zur Herstellung von Persalz durch Kristallisation-Sichtung gemäß einem der Ansprüche 1 bis 6, die einen Kristallisationsbehälter in zylindrischer Form umfasst, der mit einem Drehrührer und einem Kühlsystem ausgestattet ist, dadurch gekennzeichnet, daß der Behälter eine Trennvorrichtung zwischen einer gerührten unteren Zone, in der der Rührer angeordnet ist, und einer oberen Zone ohne Rührer, die dazu bestimmt ist, die Flüssigkeit, die die Kristallisationsmutterlaugen bildet, zu klären, umfasst, daß die gerührte Zone an ihrer Basis mit Systemen zur Zufuhr der Reaktanten, die die Ausgangsmaterialien für die Herstellung des Persalzes bilden, versehen ist, daß ein Zylinder mit einem kleineren Durchmesser als dem des Behälters unter diesem angeordnet ist, mit ihm in Verbindung steht und an seiner Basis mit einem System zum Einspritzen der Lösung, die über eine Rückführpumpe aus einer Entnahmeleitung stammt, deren Anfang sich am oberen Teil der nicht gerührten Zone des Behälters befindet, versehen ist, wobei dieser Zylinder eine Zone der Sichtung durch Strömungssichten der Teilchen aus der gerührten Zone des Behälters bildet, und daß eine Vorrichtung zur Entnahme der gesichteten Teilchen an die Basis besagten Zylinders angeschlossen ist.

11. Vorrichtung gemäß Anspruch 10, dadurch gekennzeichnet, daß die Sichtungszone mit einem Rührer ausgestattet ist.

12. Vorrichtung gemäß einem der Ansprüche 10 oder 11, dadurch gekennzeichnet, daß die Achse des Rührers des Kristallisationsbehälters hohl ist und eine Leitung umfasst, die an ihrem unteren Ende mit Leitungen in Verbindung steht, die in jeden der unteren Flügel des Rührers gebohrt sind und die an deren Enden münden und das Einspritzen und die Verteilung der Wasserstoffperoxidlösung oder der Alkalimetallsalzlösung in die Bildungs- und Wachstumszone des Kristallisators ermöglichen.

13. Vorrichtung gemäß einem der Ansprüche 10 bis 12, dadurch gekennzeichnet, daß der Sichtungszylinder in der Achse des Kristallisationsbehälters angeordnet ist und mit diesem verbunden ist.

FIG. 1

FIG. 2